# DEMANDE DE BREVET EUROPEEN

(11) **EP 4 036 717 A1**
(43) Date de publication de la demande: **03.08.2022**
(21) Numéro de dépôt: 22152886.2
(22) Date de dépôt: 24.01.2022
(51) Int. Cl.: G06F 9/445, G06F 21/57

(54) **DÉMARRAGE D'UNE APPLICATION**

(30) Priorité: 02.02.2021 FR 2100996
(71) Demandeur: PROTON WORLD INTERNATIONAL N.V., 1831 Diegem (BE)
(72) Inventeur: VAN NIEUWENHUYZE, Olivier, 1970 WEZEMBEEK-OPPEM (BE)
(74) Mandataire: Cabinet Beaumont

(57) **Abrégé**

La présente description concerne un procédé de démarrage d'une première application adaptée à être mise en oeuvre par au moins un système d'exploitation de bas niveau d'un élément sécurisé, comprenant la vérification d'au moins une première information mise à jour après chaque opération de redémarrage de l'élément sécurisé, ladite première information étant associée audit au moins un système d'exploitation de bas niveau.

## Description

### Domaine technique

La présente description concerne de façon générale les dispositifs électroniques, et de façon plus particulière les dispositifs électroniques adaptés à traiter des données secrètes. Plus particulièrement, la présente description concerne des dispositifs électroniques mettant en oeuvre différentes applications, et, en particulier, des procédés de démarrage d'une application par un tel dispositif électronique.

### Technique antérieure

Un élément sécurisé est un dispositif électronique, autonome ou non, adapté à traiter des données secrètes de façon sécurisée, c'est-à-dire sans que ces données secrètes ne soient accessibles ou déduites, par exemple par des attaques par canaux cachés (side channel attack) ou par pénétration. Un élément sécurisé peut être configuré pour chiffrer des données par exemple.

Un élément sécurisé peut être adapté à mettre en oeuvre une ou plusieurs applications de façon sécurisée.

Il serait souhaitable de pouvoir améliorer, au moins en partie, certains aspects des éléments sécurisés, et plus particulièrement certains aspects de la mise en oeuvre d'une ou plusieurs applications par un élément sécurisé.

### Résumé de l'invention

Il existe un besoin pour des éléments sécurisés adaptés à mettre en oeuvre plusieurs applications.

Il existe un besoin pour des éléments sécurisés adaptés à mettre en oeuvre plusieurs applications, et dont l'exécution des applications reste sécurisée même après un redémarrage ou une réinitialisation de l'élément sécurisé.

Un mode de réalisation pallie tout ou partie des inconvénients des éléments sécurisés connus.

Un mode de réalisation prévoit un élément sécurisé adapté à mettre en oeuvre plusieurs applications de façon sécurisée, même après un redémarrage ou une réinitialisation de l'élément sécurisé.

Un mode de réalisation prévoit un procédé de démarrage d'une première application adaptée à être mise en oeuvre par au moins un système d'exploitation de bas niveau d'un élément sécurisé, comprenant la vérification d'au moins une première information mise à jour après chaque opération de redémarrage de l'élément sécurisé, ladite première information étant associée audit au moins un système d'exploitation de bas niveau.

Un autre mode de réalisation prévoit un élément sécurisé configuré pour mettre en oeuvre au moins un système d'exploitation de bas niveau mettant en oeuvre au moins une première application, dans lequel, à chaque démarrage de la première application, une première information mise à jour après chaque opération de redémarrage de l'élément sécurisé, est vérifiée, ladite première information étant associée audit au moins un système d'exploitation de bas niveau.

Selon un mode de réalisation, la vérification de la première information est effectuée par comparaison de la première information à une deuxième information associée à ladite première application.

Selon un mode de réalisation, la comparaison entre la première information et la deuxième information est effectuée par ledit au moins un système d'exploitation de bas niveau.

Selon un mode de réalisation, la comparaison entre la première information et la deuxième information est effectuée par ladite première application.

Selon un mode de réalisation, si la vérification échoue, ladite au moins une deuxième information est mise à jour.

Selon un mode de réalisation, ladite au moins une deuxième information est mise à jour en étant rendue égale à la première information.

Selon un mode de réalisation, après la mise à jour de ladite au moins une deuxième information, ledit au moins un système d'exploitation de bas niveau informe ladite première application qu'une opération de redémarrage a eu lieu.

Selon un mode de réalisation, après avoir été informée, la première application met en oeuvre un protocole prenant en compte qu'une opération de redémarrage a eu lieu.

Selon un mode de réalisation, au moins une troisième information, associée audit au moins un système d'exploitation de bas niveau et mise à jour après chaque opération de redémarrage de l'élément sécurisé est vérifiée à chaque démarrage de ladite première application.

Selon un mode de réalisation, ladite au moins une première information est associée à un premier type d'opération de redémarrage, et la troisième information est associée à un deuxième type d'opération de redémarrage.

Selon un mode de réalisation, l'opération de redémarrage d'un premier type est une opération de redémarrage à froid où une alimentation électrique de l'élément sécurisé est arrêtée.

Selon un mode de réalisation, l'opération de redémarrage d'un deuxième type est une opération de redémarrage à chaud où une alimentation électrique de l'élément sécurisé n'est pas arrêtée.

Selon un mode de réalisation, l'élément sécurisé est embarqué dans un dispositif électronique.

Selon un mode de réalisation, l'élément sécurisé est intégré dans un dispositif électronique.

Selon un mode de réalisation, l'élément sécurisé est adapté à mettre en oeuvre au moins une deuxième application.

Un autre mode de réalisation prévoit une application adaptée à être mise en oeuvre par au moins un système d'exploitation de bas niveau d'un élément sécurisé décrit précédemment.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon schématique et sous forme de blocs, un exemple d'un dispositif électronique du type auquel s'appliquent les modes de réalisation décrits ;
la figure 2 représente, de façon schématique et sous forme de blocs, un autre exemple de dispositif électronique du type auquel s'appliquent les modes de réalisation décrits ;
la figure 3 représente, de façon schématique et sous forme de blocs, un mode de réalisation d'une architecture logicielle d'un élément sécurisé d'un dispositif électronique du type de ceux décrits en relation avec les figures 1 et 2 ;
la figure 4 représente, de façon schématique et sous forme de blocs, un organigramme illustrant différents états d'une application mise en oeuvre par un élément sécurisé d'un dispositif électronique du type de ceux décrits en relation avec les figures 1 et 2 ;
la figure 5 représente, de façon schématique et sous forme de blocs, un organigramme illustrant différents types de redémarrage ou de réinitialisation pouvant être mis en oeuvre par un dispositif électronique du type de ceux décrits en relation avec les figures 1 et 2 ;
la figure 6 représente, de façon schématique et sous forme de blocs, un organigramme illustrant un mode de mise en oeuvre d'un procédé de démarrage d'une application par un dispositif électronique du type de ceux décrits en relation avec les figures 1 et 2 ; et
la figure 7 représente, de façon schématique et sous forme de blocs, un organigramme illustrant un mode de mise en oeuvre d'un procédé de démarrage d'une application par un dispositif électronique du type de ceux décrits en relation avec les figures 1 et 2.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

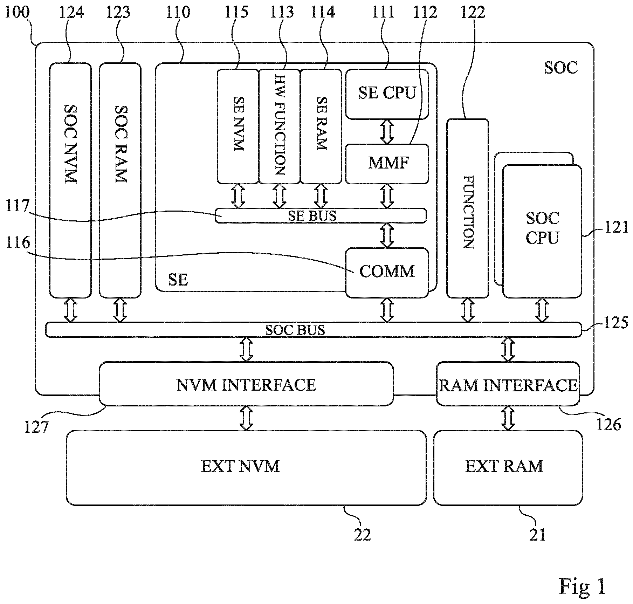

La figure 1 représente, de façon schématique et sous forme de blocs, un exemple de dispositif électronique 100 (SOC) du type auquel s'appliquent les modes de réalisation décrits.

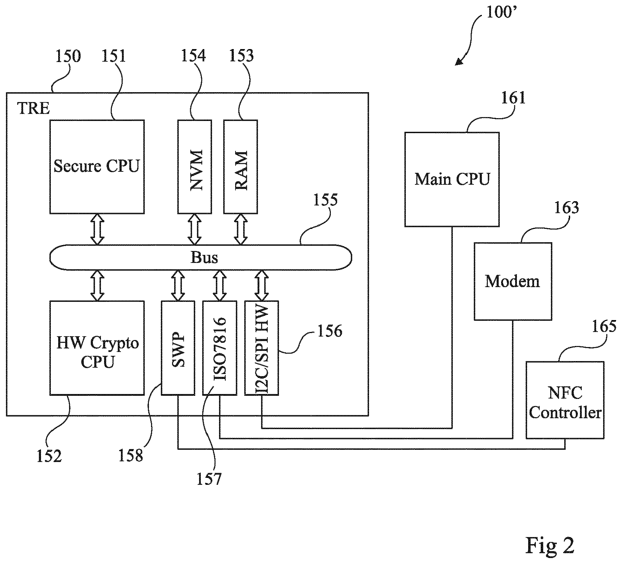

Le dispositif 100 est un dispositif électronique formé sur une seule et même puce (System On Chip - SOC). Le dispositif 100 comprend un élément sécurisé 110 (SE) qui, dans cet exemple, est intégré (iSE - integrated Secure Element). L'élément sécurisé 110 est un élément sécurisé intégré dans le dispositif 100, c'est-à-dire qui peut avoir un fonctionnement autonome dans le dispositif 100. Selon une variante de réalisation, l'élément sécurisé 110 peut être embarqué, c'est-à-dire qu'il peut utiliser certaines ressources matérielles du dispositif 100 pour fonctionner, comme des mémoires, des circuits mettant en oeuvre des fonctionnalités spécifiques, etc. Un exemple plus détaillé de l'élément sécurisé 110 embarqué est décrit en relation avec la figure 2.

L'élément sécurisé 110 est un circuit électronique manipulant des données secrètes qui sont, par exemple, chiffrées. L'élément sécurisé 110 comprend :
- au moins un processeur 111 (SE CPU) adapté à traiter des données secrètes ;
- une fonction de gestion de mémoire 112 (MMF) et/ou une unité de gestion de mémoire (MMU) (non représentée en figure 1), adaptées à gérer la lecture et l'écriture de données dans les mémoires ;
- un ou plusieurs circuits 113 (HW FUNCTION) adaptés à mettre en oeuvre des fonctionnalités matérielles (par exemple un accélérateur cryptographique, une cellule de communication, etc.) de l'élément sécurisé 110 ;
- au moins une mémoire volatile 114 (SE RAM) ;
- au moins une mémoire non volatile 115 (SE NVM) ;
- un circuit de communication 116 (COMM) adapté à gérer les transmissions de données et de commandes entre l'élément sécurisé 110 et le reste du dispositif 100 ; et
- un bus de communication 117 (SE BUS) reliant tous les éléments de l'élément sécurisé 110.

En variante, l'élément sécurisé intégré 110 est connecté à un ou plusieurs bus additionnels de communication. Par exemple, l'élément sécurisé intégré peut avoir un bus selon la norme ISO7816, connecté avec un modem du système sur puce 100, un autre bus de type SWP (Single Wire Protocol - Protocole Unifilaire) connecté à un dispositif de communication en champ proche (NFC - Near Field Communication). Ce cas est décrit plus en détail en relation avec la figure 2.

Le processeur 111 est utilisé pour traiter des commandes et données provenant des mémoires 114 et 115, ou d'autres mémoires comprises dans le dispositif 100. Le processeur 111 utilise le circuit de gestion de mémoire 112 comme intermédiaire pour gérer le stockage en mémoire des données et des commandes, ainsi pour le processeur, le logiciel en cours d'exécution, n'a jamais directement accès aux mémoires 114 et 115. A titre d'exemple, le circuit 112 peut, par exemple, servir à allouer des espaces mémoire d'une mémoire volatile ou d'une mémoire non volatile à certaines applications mises en oeuvre par l'élément sécurisé intégré.

Les circuits 113 peuvent comprendre une multitude de types de circuits et de composants, des fonctions permettant la copie des données vers des mémoires externes, des coprocesseurs cryptographiques, etc.

Le circuit de communication 116 peut servir de chaîne de réception et d'émission de données à l'élément sécurisé 110. Le circuit 116 peut comprendre des circuits de réception de données, des circuits de chiffrement et/ou de déchiffrement de données, un ou plusieurs routeurs, des circuits de conversion de données.

Le dispositif 100 peut ne comprendre que l'élément sécurisé 110, mais peut aussi comprendre, en outre, de façon optionnelle :
- un ou plusieurs processeurs 121 (SOC CPU) adaptés à traiter des données ;
- un ou plusieurs circuits 122 (FUNCTION) adaptés à mettre en oeuvre différentes fonctionnalités du dispositif 100 ;
- une ou plusieurs mémoires volatiles 123 (SOC RAM) ;
- une ou plusieurs mémoires non volatiles 124 (SOC NVM) ; et
- un bus de communication 125 (SOC BUS) permettant d'échanger et de transmettre des commandes et des données à tous les éléments précédemment cités.

Pour des raisons d'encombrement et de compacité, le dispositif 100 peut, en outre, être adapté à stocker des données dans une ou plusieurs mémoires externes. Plus particulièrement, le dispositif 100 peut être adapté à stocker des données dans une mémoire volatile externe 21 (EXT RAM) et/ou dans une mémoire non volatile externe 22 (EXT NVM). Dans ce cas, le dispositif 100 comprend, en outre, des circuits d'interface adaptés à communiquer avec ces mémoires externes 21 et 22. Plus particulièrement, le dispositif 100 peut comprendre, dans ce cas-là, un circuit d'interface 126 (RAM INTERFACE) adapté à communiquer avec la mémoire volatile externe 21, et/ou un circuit d'interface 127 (NVM INTERFACE) adapté à communiquer avec la mémoire non volatile 22.

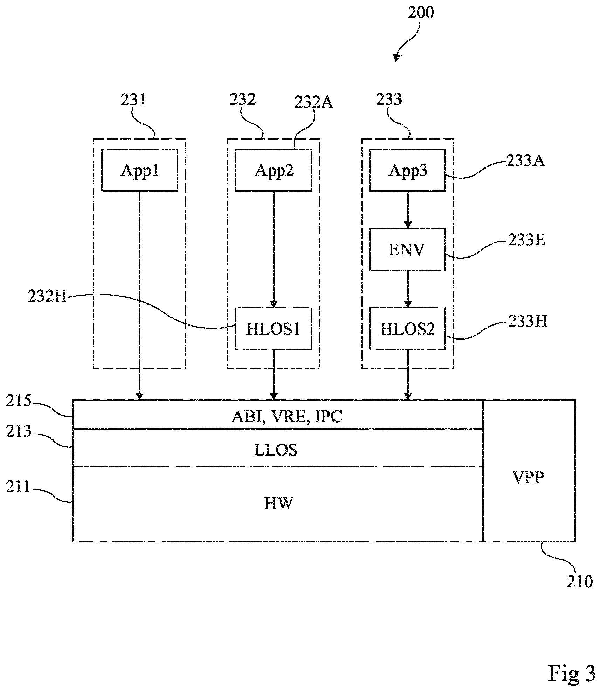

L'élément sécurisé 110 peut avoir accès aux ressources matérielles du dispositif 100 pour fonctionner, comme par exemple aux circuits 122, aux mémoires 123, 124 ou même aux mémoires 21 et 22. Comme dit précédemment, l'élément sécurisé 110 peut être intégré au dispositif 100 ou embarqué dans le dispositif 100. Lorsque l'élément sécurisé 110 est intégré, sa mémoire non volatile 115 a une capacité de stockage très faible, par exemple de l'ordre de 1 ou 2 kilo-octets, sa mémoire volatile 114 a une plus grande capacité de stockage, par exemple supérieure à 8 méga-octets, et les circuits 113 sont limités au minimum nécessaire, voire ne sont pas présents dans l'élément sécurisé 110. Pour fonctionner, l'élément sécurisé, lorsqu'il est intégré, a recours à la mémoire non volatile 124 du dispositif 100 ou à la mémoire non volatile externe 22 pour stocker des données, et aux circuits 122 du dispositif 100. Par ailleurs, lorsque l'élément sécurisé 110 est embarqué, sa mémoire non volatile 115 a une capacité de stockage plus grande lui permettant de stocker plus de données, par exemple de l'ordre de 4,5 méga-octets, et les circuits 113 sont présents dans l'élément sécurisé 110. Ainsi, l'élément sécurisé 110, quand il est embarqué, est autonome dans son fonctionnement. D'autres différences entre l'élément sécurisé intégré et l'élément sécurisé embarqué sont décrites en relation avec les figures 2 et 3.

La figure 2 représente, de façon schématique et sous forme de blocs, un autre exemple de dispositif électronique 100' du type auquel s'appliquent les modes de réalisation décrits.

Le dispositif 100' comporte divers circuits ou puces électroniques parmi lesquels :
- un élément sécurisé embarqué (embedded Secure Element - eSE) 150 constituant un environnement sécurisé (TRE - Tamper Resistant Element) ;
- un processeur principal 161 (Main CPU) ;
- un circuit de communication 163 (Modem) de type modem ; et
- un circuit de communication en champ proche 165 (NFC controller).

L'élément sécurisé embarqué 150 est constitué d'une seule puce et intègre, par exemple :
- un processeur sécurisé 151 (Secure CPU) ;
- un processeur cryptographique matériel 152 (HW Crypto CPU) ou accélérateur cryptographique ;
- une ou plusieurs mémoires volatiles 153 (RAM) ;
- une ou plusieurs mémoires non volatiles 154 (NVM) ; et
- un ou plusieurs bus 155 (Bus) de communication entre les différents constituants de l'élément 150.

L'élément 150 intègre en outre des interfaces de communication avec l'extérieur selon divers protocoles de communication, par exemple :
- une interface 156 (I2C/SPI HW) de type I2C ou SPI de communication avec le processeur externe 161 ;
- une interface 157 (ISO7816) de communication selon la norme ISO7816 avec le modem 163 ; et
- une interface 158 (SWP) de type SWP de communication avec le contrôleur NFC 165.

Le dispositif 100' peut comprendre d'autres circuits, intégrés ou non. Par exemple, l'élément sécurisé embarqué 150 peut utiliser une ou plusieurs mémoires externes (non représentées en figure 2) avec lesquelles il communique directement ou via le processeur principal.

A la différence d'un élément sécurisé intégré tel que l'élément 110 de la figure 1, un élément sécurisé embarqué 150 n'est pas intégré avec les autres constituants du dispositif 100' et notamment le processeur principal de l'application.

L'élément sécurisé embarqué 150 peut cependant être combiné avec un contrôleur de communication en champ proche 165 (NFC).

Selon une variante, l'élément sécurisé embarqué 150 peut comprendre des éléments de gestion de mémoire comme la fonction de gestion de mémoire 112 ou l'unité de gestion de mémoire décrite en relation avec la figure 1, permettant d'empêcher son processeur sécurisé 151 d'avoir un accès direct aux mémoires 153 et 154.

La figure 3 représente, de façon schématique et sous forme de blocs, un mode de réalisation d'une architecture logicielle 200 d'un élément sécurisé SE d'un dispositif électronique du type de ceux décrits en relation avec les figures 1 et 2.

Sauf précision contraire, l'expression "élément sécurisé" désigne par la suite indifféremment un élément sécurisé embarqué ou un élément sécurisé intégré. Ainsi, l'architecture logicielle 200 de l'élément sécurisé SE peut être mise en oeuvre dans l'un quelconque des éléments 110 et 150 des figures précédentes.

L'architecture 200 comprend une plateforme primaire virtuelle 210 (VPP, Virtual Primary Plateform), ou plateforme primaire 210, permettant de mettre en oeuvre les différentes fonctionnalités de l'élément sécurisé SE. La plateforme primaire 210 est composée de trois niveaux :
- l'accès à des composants électroniques 211 (HW, Hardware) de l'élément sécurisé SE ;
- un ou plusieurs systèmes d'exploitation de bas niveau 213 (LLOS, Low Level Operating System) ; et
- une ou plusieurs interfaces logicielles 215 (ABI, VRE, IPC).

Les composants 211 sont les ressources matérielles de l'élément sécurisé SE (110, figure 1 ; 150, figure 2). Les composants 211 de l'élément sécurisé 110 sont, par exemple, les un ou plusieurs processeurs, par exemple le processeur 111 (figure 1) ou 151 (figure 2), une ou plusieurs mémoires, par exemple les mémoires 114 et 115 (figure 1) ou 153 et 154 (figure 2), un ou plusieurs dispositifs de communication, comme un dispositif de communication permettant de communiquer directement avec un dispositif de communication en champ proche (NFC, Near Field Communication), un dispositif de communication à courte distance utilisant, par exemple, la norme Bluetooth, des capteurs biométriques, un dispositif adapté à la technologie d'ultra large bande, aussi connue sous la dénomination Ultra Wideband (UWB), etc.

Les systèmes d'exploitation de bas niveau 213 sont des logiciels adaptés à mettre en oeuvre les composants 211 pour exécuter des commandes reçues de la part des applications mises en oeuvre par l'élément sécurisé. A titre d'exemple, les systèmes d'exploitation de bas niveau 213 comprennent tout ou partie des logiciels pilotes des composants 211.

Un système d'exploitation de bas niveau 213 est composé d'un code d'exécution (ou code exécutable) et de données d'exécution. Le code d'exécution contient des instructions permettant l'exécution des fonctions du programme. Par définition, les instructions sont invariables pour un programme donné, à l'exception d'une mise à jour du programme qui modifie alors les instructions. Les données d'exécution sont utilisées par le code d'exécution pour contextualiser l'exécution et réaliser la fonction souhaitée. Les données d'exécution peuvent être réparties en deux catégories. Les données d'exécution dites "temporaires" et les données d'exécution dites "permanentes" ou "fixes", détaillées ci-après.

La plateforme primaire 210 communique avec des applications mises en oeuvre par l'élément sécurisé 110 par l'intermédiaires des interfaces logicielles 215 exécutées par la plateforme primaire. Ces interfaces 215 peuvent comprendre, entres autres :
- des interfaces binaire-programme (ABI, Application Binary Interface) ;
- des registres (VRE, Virtual Register) ; et
- des mémoires tampon de mémorisation, ou mémoires tampon, ou encore des mémoires partagées permettant l'échange de données entre processus via des communications inter-processus (IPC - Inter Process Communication).

Une interface binaire-programme est une interface de bas niveau entre les applications mises en oeuvre par l'élément sécurisé (décrites ci-après) et les systèmes d'exploitation de bas niveau 213, ou entre différentes parties d'une application. Les interfaces binaire-programme permettent de faire la liaison entre lesdites applications et les composants 211.

Les registres sont des espaces mémoire liés à une fonction matérielle de l'élément sécurisé et utilisés pour stocker temporairement des données, par exemple lorsqu'une commande est envoyée à la plateforme primaire 210 de l'élément sécurisé ou lors d'échanges entre processus exécutés par la plateforme primaire.

Les mémoires tampon (ou mémoires partagées) sont utilisées pour stocker des messages avant leur utilisation par la plateforme 210 ou par des applications de l'élément sécurisé. En pratique, les mémoires tampon sont des espaces mémoire alloués dans une mémoire de l'élément 110 ou 100', par exemple une mémoire volatile à laquelle l'élément 110 a accès, comme la mémoire 114.

A titre d'exemple, l'architecture logicielle 200 comprend au moins trois applications 231, 232, 233 adaptées à être mises en oeuvre par la plateforme primaire 210. Les applications 231, 232, 233 sont des logiciels ou des programmes informatiques utilisant les ressources de la plateforme primaire. Bien entendu, l'élément sécurisé met en oeuvre un nombre d'applications dans la limite de ses capacités de calcul, et de ses capacités de stockage de données.

Comme les systèmes d'exploitation de bas niveau 213, chaque application 231, 232, 233 est composée d'un code d'exécution (ou code exécutable) et de données d'exécution. Le code d'exécution contient des instructions permettant l'exécution des fonctions de l'application. Par définition, les instructions sont invariables pour une application donnée, à l'exception d'une mise à jour du programme qui modifie alors les instructions. Les données d'exécution sont utilisées par le code d'exécution pour contextualiser l'exécution et réaliser la fonction souhaitée. Comme dit précédemment, les données d'exécution peuvent être réparties en deux catégories : les données d'exécution dites "temporaires" et les données d'exécution dites "permanentes" ou "fixes". Par exemple, si la fonction consiste en la vérification d'un code PIN, cette fonction est décomposée en trois parties, le code d'exécution contient des instructions de vérification du code PIN tandis que les données d'exécution permanentes contiennent le code PIN de référence et le nombre d'essais restants, et que les données d'exécution temporaires contiennent le code PIN soumis à vérification.

Un élément sécurisé intégré 110 (figure 1) pourrait n'exécuter qu'une seule application à la fois dans ses mémoires internes et enregistrer les autres applications dans des mémoires externes, ce qui permettrait d'avoir un nombre d'applications limité uniquement par la capacité de stockage des mémoires externes. Il faut alors préalablement charger l'application dans les mémoires internes avant de l'exécuter (ou de reprendre l'exécution) et décharger l'application précédente avant de pouvoir l'utiliser. A l'inverse, un élément sécurisé embarqué 150 (figure 2) privilégiera l'utilisation de ses mémoires internes pour stocker et exécuter les applications, ce qui implique une quantité plus limitée d'applications mais une exécution plus rapide car on parlera d'une exécution "en place" (in place) qui ne requiert pas de déplacer l'application. Il reste toutefois possible de combiner un élément sécurisé embarqué avec des mémoires externes et donc de combiner le bénéfice des mémoires internes et externes.

Les applications 231, 232, 233 peuvent être adaptées à mettre en oeuvre toutes sortes de fonctionnalités. Elles mettent généralement en œuvre des services digitaux d'un fournisseur de service, par exemple, un service de paiement de type EMV ou de ticket de transport. Ces applications peuvent être mises en combinaison avec une autre application se trouvant dans le processeur principal 121 (figure 1) ou 161 (figure 2) ou dans un autre environnement sécurisé (Trusted Execution Environment). Le processeur et l'environnement sécurisé sont plus à même d'interagir avec l'utilisateur via une interface utilisateur sécurisée (Trusted User Interface) . Les applications 231, 232, 233 sont, par exemple, adaptées à traiter des commandes provenant d'interfaces de communication, comme, par exemple, une transaction bancaire utilisant un dispositif de communication en champ proche. Ces applications peuvent être de différents types, par exemple, une application SIM (Subscriber Identity Module), une application de paiement, une application permettant la validation d'un ticket de transport en commun, etc.

Selon un exemple de type d'application, l'application 231 (App1) est adaptée à être mise en oeuvre directement par la plateforme primaire 210 (VPP). L'application 231 est, par exemple, une application permettant d'effectuer des paiements en communiquant avec un dispositif de communication en champ proche (NFC, Near Field Communication).

Selon un autre exemple de type d'application, l'application 232 est un ensemble d'instructions 232A (App2) adaptées à être exécutées en utilisant un système d'exploitation de haut niveau 232H (HLOS1). Un système d'exploitation de haut-niveau est un logiciel adapté à mettre en oeuvre différentes applications en leur proposant un ensemble de fonctions logicielles communes. Le système d'exploitation 232H est la seule partie de l'application 232 à communiquer avec la plateforme primaire 210. A titre de variante, on peut également considérer que le système d'exploitation de haut niveau, ainsi que toutes les applications qui lui sont attachées, sont une seule application adaptée à être mise en oeuvre par la plateforme primaire 210.

Selon un autre exemple de type d'application, une autre application 233 est un ensemble d'instructions 233A (App3) utilisant un environnement d'exécution 233E (ENV) qui utilise lui-même un système d'exploitation de haut niveau 233H (HLOS2). L'environnement d'exécution est, par exemple, de type Java ou JavaCard. Le système d'exploitation 233H et l'environnement d'exécution 233E sont les seules parties de l'application 233 à communiquer avec la plateforme primaire 210. A titre de variante, on peut également considérer que le système d'exploitation de haut niveau, ainsi que toutes les applications qui lui sont attachées, sont une application adaptée à être mise en oeuvre par la plateforme primaire 210.

Les systèmes d'exploitation de haut niveau 232H et 233H, ou les applications 232 et 233 elles-mêmes s'il n'y a pas de système d'exploitation de haut niveau, utilisent des images virtuelles des mémoires disponibles pour la gestion des codes d'exécution et des données d'exécution. Grâce à cette technique, les systèmes d'exploitation de haut niveau (ou les applications) n'ont pas accès directement à la gestion des mémoires physiques qu'elles soient volatiles ou non volatiles. En d'autres termes, dans les modes de réalisation décrits, les systèmes d'exploitation de haut niveau gèrent une image virtuelle des mémoires. La correspondance de la répartition physique dans les mémoires volatile(s) et non volatile(s) est assurée par le ou les systèmes d'exploitation de bas niveau 213 en combinaison avec certains composants 211, comme la fonction de gestion de mémoire 112 décrite en relation avec la figure 1. De manière plus générale, on considère que la plateforme primaire 210 effectue la correspondance entre les mémoires virtuelles et physiques.

La mise en oeuvre de l'application 231, 232, ou 233 est la suivante. Lorsqu'une application souhaite utiliser une ressource matérielle de l'élément sécurisé, c'est-à-dire un ou plusieurs composants 211 de la plateforme primaire 210, cela signifie que les opérations courantes exécutées sur les données fixes sont considérées comme terminées. L'application peut alors exécuter différentes commandes comme, par exemple, forcer une écriture vers une mémoire non volatile. Pour cela, l'application envoie une commande et/ou des données à la plateforme primaire 210 par l'intermédiaire des interfaces 215. La commande est prise en charge par une ou plusieurs interfaces binaire-programme avant d'être envoyée aux systèmes d'exploitation de bas niveau 213, c'est-à-dire que la commande est divisée en plusieurs opérations chacune représentée par une interface binaire-programme ou des registres virtuels ou encore une mémoire tampon / mémoire partagée. Les données sont, quant à elles, stockées dans des registres ou transmises via des communications entre processus (IPC). Les systèmes d'exploitation de bas niveau 213 répondent aux demandes des interfaces binaire-programme en appliquant les opérations demandées par les interfaces binaire-programme aux données stockées dans les registres. Les systèmes d'exploitation de bas niveau 213 pilotent ensuite les composants 211 pour exécuter ce que demande l'application.

Les applications 231, 232, 233 ne peuvent pas communiquer les unes avec les autres à l'intérieur de l'élément sécurisé. Chaque application 23x (x variant de 1 au nombre d'applications susceptibles d'être exécutées) ne connaît pas l'existence des autres applications 23x. En particulier, chaque système d'exploitation d'une application "croit" être le seul à communiquer avec l'extérieur. Ainsi, si les applications devaient communiquer entre elles, elles devraient le faire comme si elles discutaient d'un élément sécurisé exécutant une application 23x vers un autre élément avec une autre application 23x. Cependant, deux sous-applications d'un même ensemble ou application 233 (une application peut contenir plusieurs sous-applications) utilisent des procédés de communication par paquets pour communiquer entre elles en utilisant les outils IPC de communication entre processus. Chaque application 231, 232, 233 peut, quant à elle, communiquer avec des dispositifs électroniques extérieurs. La communication par paquets est une méthode de transmission de données dans laquelle des messages envoyés sont composés d'un ou plusieurs paquets de données. Chaque paquet de données comprend un en-tête (header) comprenant des informations relatives au type de protocole de communication utilisé, à l'émetteur du message, au récepteur du message, à la taille du message, etc. Parmi les différents protocoles de communication par paquets connus, l'élément sécurisé est susceptible d'utiliser (compatible avec) différents protocoles qui peuvent être classés, en fonction de la nature du protocole, en termes de protocole d'informations échangées, de protocole applicatif, de protocole de communication, de lien physique. Par exemple, ces protocoles incluent :
- le protocole VNP (Virtual Network Protocol) défini par la norme "GlobalPlatform Technology Virtual Primary Platform - Network Protocol 1.0.1" (ou toute version ultérieure) qui correspond à un protocole des informations échangées ;
- le protocole SWP (Single Wire Protocol), défini par la norme ETSI TS 102 613 UICC - Contactless Front-end (CLF) Interface - Physical and data link layer characteristics, qui correspond à un lien physique ;
- le protocole de communication défini par la norme ISO7816 qui couvre à la fois l'échange d'informations, le protocole applicatif, les communications et la nature du lien physique (sans fil) ;
- le protocole HCI (Host Controller Interface), défini par la norme ETSI TS 102 612 v12.0 (ou toute version ultérieure) qui correspond à un protocole applicatif ;
- le protocole CLT, défini par la norme ETSI TS 102 613 (UICC
- Contactless Front-end (CLF) Interface - Physical and data link layer characteristics 11.0 (ou toute version ultérieure) qui correspond à un protocole de communication ;
- le protocole sHDLC (Simplified High-Level Data Link Control), défini par la norme ETSI TS 102 613 (- UICC - Contactless Front-end (CLF) Interface - Physical and data link layer characteristics) ;
- le protocole ISO7816 défini par la norme ISO/IEC 7816 ; et
- les protocoles I2C et SPI qui correspondent à des liens physiques.

Les messages peuvent aussi être transmis par l'intermédiaire d'une mémoire faisant office de bus de communication. Autrement dit, un bus de communication peut être remplacé par une mémoire dans laquelle sont écrites les données à transmettre par le dispositif émetteur, et lues par le dispositif récepteur.

Le protocole VNP est un protocole de communication adapté à fonctionner pour les communications d'un élément sécurisé. C'est un protocole adapté à gérer l'aiguillage des messages au sein de l'architecture 200 et également vers les dispositifs extérieurs. C'est le protocole de communication privilégié dans un élément sécurisé. Selon un mode de réalisation, le routeur compris dans les composants 211 (en combinaison avec les systèmes d'exploitation de bas niveau 213) est un routeur configuré pour traiter des messages utilisant le protocole VNP.

Les protocoles HCI, sHDLC et CLT sont des protocoles qui se trouvent en conflit avec le protocole VNP, ces protocoles n'étant pas compatibles, les normes ne définissent pas l'interaction entre les deux. Le résultat de ce conflit montre que les protocoles HCI, sHDLC et CLT ne sont pas adaptés à gérer l'aiguillage des messages au sein de l'architecture 200. Ainsi, le routeur compris dans les composants 211 ne peut pas prendre en charge un message utilisant les protocoles sHDLC, CLT et HCI car il n'y a pas les informations pour aiguiller correctement les messages au sein de l'architecture 200.

Les protocoles CLT, sHDLC et HCI, et le protocole défini par la norme ISO7816 sont des protocoles qui ne sont pas compatibles avec l'utilisation du protocole VNP. Le routeur compris dans les composants 211 (en combinaison avec 213) n'est pas apte à prendre en charge un message utilisant les protocoles CLT, sHDLC, HCI et ISO7816.

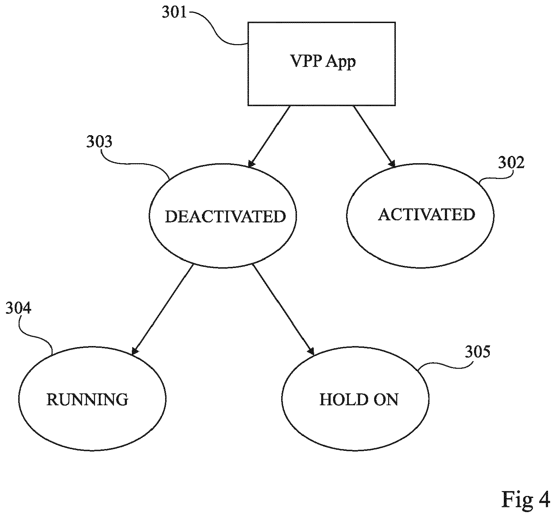

La figure 4 représente, de façon schématique et sous forme de blocs, un organigramme illustrant différents états d'une application 301 (VPP App) du type des applications 231, 232, et 233 décrites en relation avec la figure 3, exécutée par un élément sécurisé SE du type de celui décrit en figure 1 ou en figure 2.

L'application 301 comprend deux états primaires :
l'état désactivé 302 (DEACTIVATED) et l'état activé 303 (ACTIVATED).

Lorsque l'application 301 est dans l'état désactivé 302, ou est désactivée, elle n'est pas en train d'être mise en oeuvre par l'élément sécurisé SE. Selon un exemple, l'application 301 est dans l'état désactivé quand elle vient d'être installée sur l'élément sécurisé SE et qu'elle n'a jamais été mise en oeuvre. Selon un autre exemple, l'application 301 peut être dans un état désactivé quand elle a décidé d'être mise dans l'état désactivé, par exemple lorsqu'elle vient de terminer une tâche. Plus particulièrement, le code d'exécution et les données d'exécution fixes de l'application 301 sont stockées dans une mémoire non volatile. Deux cas se présentent alors. Si l'élément sécurisé est intégré dans un dispositif électronique, alors tout ou partie du code d'exécution et des données d'exécution de l'application 301 sont stockés dans une mémoire non volatile externe à l'élément sécurisé SE. Selon un exemple, la totalité du code d'exécution et des données d'exécution de l'application 301 sont stockés dans une mémoire non volatile externe à l'élément sécurisé SE, comme la mémoire 124 décrite en relation avec la figure 1. Cependant, si l'élément sécurisé SE est embarqué dans un dispositif électronique, alors le code d'exécution et les données d'exécution fixes de l'application sont stockées dans une mémoire non volatile comprise dans l'élément sécurisé SE, comme la mémoire non volatile 115 décrite en relation avec la figure 1, ou la mémoire non volatile 154 décrite en relation avec la figure 2.

Lorsque l'application 301 est dans l'état activé 303, ou est activée, elle est en train d'être mise en oeuvre par l'élément sécurisé SE. L'application 301 comprend alors deux états secondaires dans lequel elle peut être, l'état en cours d'exécution 304 (RUNNING) et l'état en pause 305 (HOLD ON).

Lorsque l'application 301 est dans l'état en cours d'exécution 304, ou est en cours d'exécution, l'application 301 est mise en oeuvre au premier plan par l'élément sécurisé SE. Dans l'exemple de la figure 1, c'est-à-dire dans l'exemple d'un élément sécurisé intégré dans un dispositif électronique, tout ou partie du code d'exécution et des données d'exécution fixes de l'application 301 ont été chargés dans une mémoire volatile pour être utilisés, par exemple la mémoire volatile 114 décrite en relation avec la figure 1. Dans l'exemple de la figure 2, c'est-à-dire dans l'exemple d'un élément sécurisé embarqué dans un dispositif électronique, tout ou partie du code d'exécution et des données d'exécution fixes de l'application 301 sont exécutés à partir de la mémoire non volatile 154 décrite en relation avec la figure 2. On parle alors d'exécution en place ("in place") de l'application. Le verbe "charger" signifie ici que le code d'exécution et les données d'exécution fixes sont copiés depuis la mémoire non volatile, et cette copie est stockée dans la mémoire volatile. L'application 301 génère et utilise aussi des données d'exécution temporaires pendant qu'elle est en cours d'exécution, et ces données d'exécution temporaires sont aussi stockées dans une mémoire volatile.

Lorsque l'application 301 est dans l'état en pause 305, ou est en pause, son exécution est temporairement arrêtée, par exemple pour laisser place à l'exécution d'une autre application de l'élément sécurisé. Tout ou partie du code d'exécution et des données d'exécution fixes et temporaires de l'application 301 sont chargés dans une zone assimilée à un espace de stockage volatil géré par la plateforme primaire VPP. Lorsque l'élément sécurisé SE est intégré à un dispositif électronique, la zone assimilée à un espace de stockage volatil est la mémoire volatile de l'élément sécurisé, par exemple la mémoire volatile 114 décrite en relation avec la figure 1. Lorsque l'élément sécurisé SE est embarqué dans un dispositif électronique, la zone assimilée à un espace de stockage volatil est la combinaison de la mémoire volatile de l'élément sécurisé SE et d'une partie de la mémoire non volatile de l'élément sécurisé SE. Un exemple de management d'une zone assimilée à un espace de stockage volatil dans le cas où l'élément sécurisé est embarqué est décrit plus en détail dans la demande de brevet française de référence FR1903168, publiée sous la référence FR3094526.

Lorsque l'application 301 est en pause, elle n'a pas "conscience" d'être en pause. L'application 301 ne se rend pas compte que sa mise en oeuvre a été arrêtée par un événement autre, comme la mise en oeuvre d'une autre application.

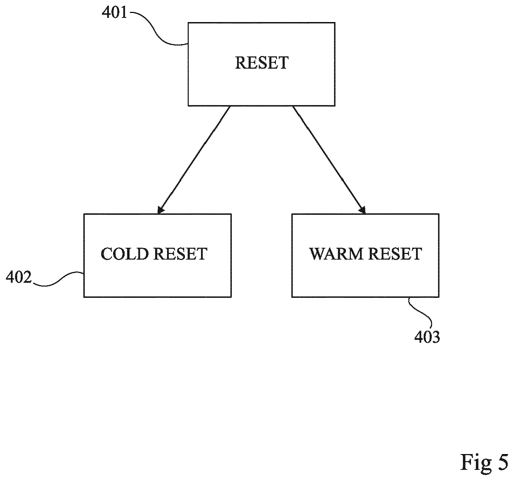

La figure 5 représente, de façon schématique et sous forme de blocs, un organigramme illustrant différentes opérations de redémarrage 401 (RESET) d'un élément sécurisé SE du type de ceux décrits en figure 1 et en figure 2.

Il existe au moins deux types d'opérations de redémarrage de l'élément sécurisé SE :
- une opération de redémarrage à froid 402 (COLD RESET) ; et
- une opération de redémarrage à chaud 403 (WARM RESET).

Pendant une opération de redémarrage à froid, ou un redémarrage à froid, l'alimentation électrique de l'élément sécurisé SE, ou à fortiori celle du dispositif électronique comprenant l'élément sécurisé SE, est arrêtée, au moins momentanément. Sans alimentation électrique, les mémoires volatiles de l'élément sécurisé SE, et du dispositif électronique le comprenant, sont réinitialisées, et toutes les données qu'elles stockent sont effacées. Ainsi des données d'exécution fixes et temporaires d'une application active, c'est-à-dire d'une application en cours d'exécution ou en pause, sont effacées. Les mémoires non volatiles de l'élément sécurisé, et du dispositif électronique le comprenant, ne sont pas réinitialisés, puisque les mémoires non volatiles ont la caractéristique de conserver les données qu'elles stockent même après un arrêt de l'alimentation électrique de la mémoire non volatile. De plus, une application active mais mise en pause, peut ne pas recevoir l'instruction de redémarrage à froid.

Une opération de redémarrage à chaud, ou un redémarrage à chaud, est un redémarrage effectué de manière logicielle ou de manière matérielle, mais sans comprendre une coupure de l'alimentation électrique. Ce redémarrage peut être demandé, par exemple, par un composant, une application, ou par une instruction provenant d'un dispositif électronique externe. Le redémarrage à chaud peut entrainer la réinitialisation des mémoires volatiles de l'élément sécurisé, et du dispositif électronique le comprenant. Cependant, ce redémarrage à chaud étant effectuée par des moyens logiciels, une application active mais mise en pause, peut ne pas recevoir l'instruction de redémarrage à chaud.

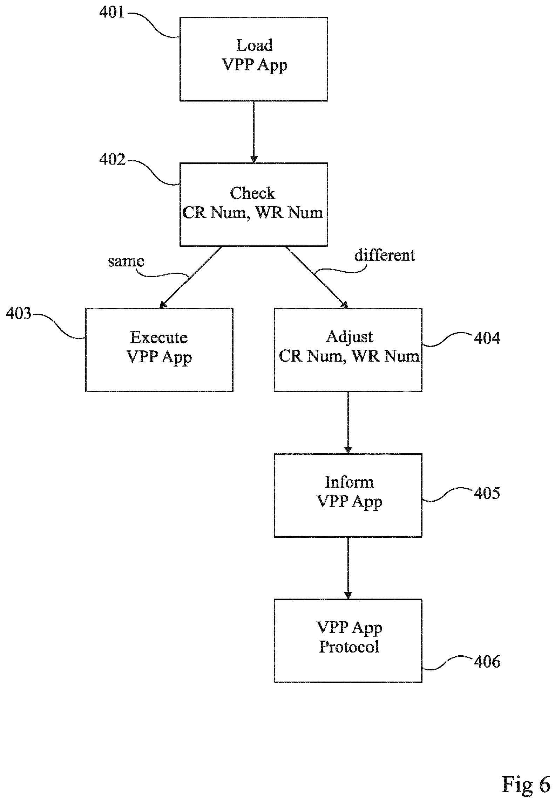

La figure 6 est un organigramme illustrant un mode de mise en oeuvre d'étapes d'un procédé de démarrage d'une application VPP App, du type des applications 231, 232, 233 décrites en relation avec la figure 3, par un élément sécurisé SE, du type des éléments sécurisés 110 et 150 décrits en relation avec les figures 1 et 2. L'élément sécurisé SE comprend une plateforme primaire VPP, du type de la plateforme primaire 210 décrite en relation avec la figure 3, adaptée à mettre en oeuvre l'application VPP App.

Le procédé de démarrage décrit ici, ou procédé de mise en exécution de l'application VPP App, est adapté à prendre en compte une éventuelle opération de redémarrage subie par l'élément sécurisé SE. En effet, selon un mode de réalisation, pour prendre en compte une éventuelle opération de redémarrage, la plateforme primaire VPP et les applications mises en oeuvre par l'élément sécurisé SE ont chacune au moins une information mise à jour à chaque redémarrage. Selon un exemple, l'information peut être mise à jour à chaque redémarrage que ce soit un redémarrage à chaud ou un redémarrage à froid. Selon une variante, l'information peut être mise à jour à chaque redémarrage d'un certain type, par exemple seulement à un redémarrage à chaud, respectivement un redémarrage à froid.

Selon un mode de réalisation, la plateforme primaire VPP et les applications mises en oeuvre par l'élément sécurisé SE ont chacune au moins une information mise à jour à chaque redémarrage à froid, et au moins une information mise à jour à chaque redémarrage à chaud. Plus particulièrement, les informations sont mises à jour à chaque fois que la plateforme primaire, respectivement les applications mises en oeuvre par l'élément sécurisé, ont conscience qu'une opération de redémarrage à chaud ou à froid a eu lieu. En pratique, la plateforme primaire a toujours conscience qu'une opération de redémarrage à chaud ou à froid a lieu. Les informations sont, par exemple, des données binaires modifiées à chaque opération de redémarrage à froid ou à chaud. Selon un exemple de réalisation, les informations représentent chacune la date et l'heure du dernier redémarrage à froid ou à chaud. Selon un autre exemple de réalisation, les informations sont des nombres aléatoires générés à chaque redémarrage à froid ou à chaud. Selon un autre exemple de réalisation, les informations sont des nombres incrémentés à chaque nouveau redémarrage à froid ou à chaud. Dans la suite de la description, on note :
- CR Num VPP, l'information de la plateforme primaire VPP mise à jour à chaque redémarrage à froid ;
- WR Num VPP, l'information de la plateforme primaire VPP mise à jour à chaque redémarrage à chaud ;
- CR Num, l'information de l'application VPP App mise à jour à chaque redémarrage à froid ; et
- WR Num, l'information de l'application VPP App mise à jour à chaque redémarrage à chaud.

Le procédé de démarrage de l'application VPP App est donc le suivant.

A une étape 401 (Load VPP App), l'application VPP App veut démarrer. Si l'application VPP App était inactive avant l'étape 401, elle commence le chargement de tout ou partie de son code d'exécution et de ses données d'exécution fixes dans la mémoire non volatile de l'élément sécurisé SE. Si l'application VPP App était en pause avant l'étape 401, elle commence le chargement de tout ou partie de son code d'exécution et de ses données d'exécution fixes et temporaires dans la mémoire non volatile de l'élément sécurisé SE.

A une étape 402 (Check CR Num, WR Num), successive à l'étape 401, la plateforme primaire VPP vérifie que ses informations CR Num VPP et WR Num VPP coïncident avec les informations CR Num et WR Num de l'application VPP App. Par cette vérification, la plateforme primaire VPP vérifie si une opération de redémarrage à froid ou à chaud a été effectuée sans que l'application VPP App ne l'ait prise en compte. En effet, lorsqu'une opération de redémarrage à froid, respectivement à chaud, est subie, ou mise en oeuvre, par l'élément sécurisé SE, la plateforme primaire VPP en a toujours conscience, et met à jour son information CR Num VPP, respectivement son information WR Num VPP. L'application VPP App, quant à elle, peut ne pas avoir eu conscience qu'un redémarrage à froid, respectivement à chaud, a eu lieu. Si les informations CR Num VPP et CR Num, respectivement WR Num VPP et WR Num, coïncident (sortie same en figure 6) l'étape suivante est l'étape 403 (Execute VPP App). Sinon (sortie different en figure 6), l'étape suivante est l'étape 404 (Adjust CR Num, WR Num).

Selon une variante de réalisation, une application mise en pause pourrait à chacun de ses redémarrages vérifier ses informations CR Num et WR Num en les comparant aux informations CR Num VPP et WR Num VPP de la plateforme primaire.

A l'étape 403, les informations CR Num VPP et CR Num, respectivement WR Num VPP et WR Num, coïncident, l'application VPP App n'a pas "raté" d'opération de redémarrage à froid, respectivement à chaud. L'application VPP App peut s'exécuter.

A l'étape 404, l'information CR Num, respectivement l'information WR Num, de l'application VPP App est rendue égale à l'information CR Num VPP, respectivement l'information WR Num VPP, de la plateforme primaire VPP. C'est la plateforme primaire VPP qui met à jour les informations CR Num et/ou WR Num de l'application VPP App.

A une étape 405 (Inform VPP App), successive à l'étape 404, la plateforme primaire VPP informe l'application VPP App qu'une opération de redémarrage a eu lieu. De plus, la plateforme primaire VPP informe l'application VPP App si cette opération était une opération de redémarrage à froid ou à chaud.

Il est possible que l'application VPP App n'ait pas eu conscience de plusieurs opérations de redémarrage à froid et/ou à chaud consécutives. S'il y a, parmi les plusieurs opérations de redémarrage, au moins une opération de redémarrage à froid, la plateforme primaire VPP indique à l'application VPP App qu'une opération de redémarrage à froid a eu lieu. Sinon, la plateforme primaire VPP indique à l'application VPP App qu'une opération de redémarrage à chaud a eu lieu. Selon une variante de réalisation, lors de la mise en oeuvre de plusieurs opérations de redémarrage à chaud successives, la plateforme primaire VPP pourrait indiquer le nombre d'opérations de redémarrage à chaud effectuées à l'application VPP avant son exécution.

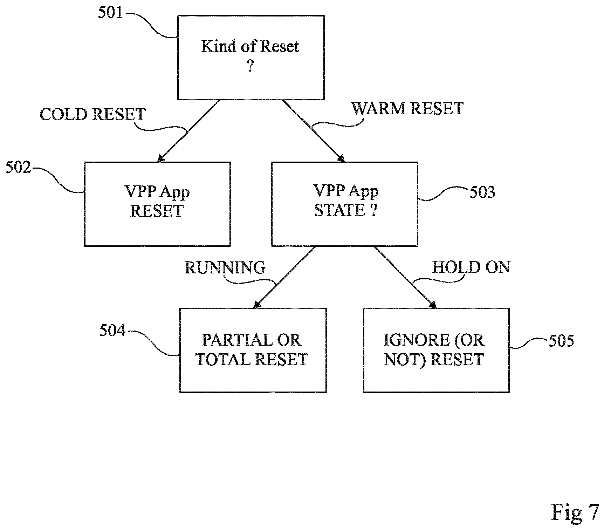

A une étape 406 (VPP App Protocol), successive à l'étape 405, l'application VPP App prend en compte l'information reçue à l'étape 405 de la part de la plateforme primaire, puis exécute un protocole propre au type d'opération de redémarrage qui a eu lieu. Des exemples de protocole sont décrits en relation avec la figure 7.

Un avantage de ce mode de réalisation est qu'il permet à une application de ne "manquer" aucune opération de redémarrage, et de lui laisser donc la possibilité d'effacer tout ou partie de ses données d'exécution temporaires.

La figure 7 représente, de façon schématique et sous forme de blocs, un organigramme illustrant un exemple de protocole de l'application VPP App de la figure 6, mis en oeuvre pendant l'étape 406 décrite en relation avec la figure 6.

Pour rappel, à l'étape 406 de la figure 6, l'application VPP App a été informée, par la plateforme primaire VPP de l'élément sécurisé SE, qu'une opération de redémarrage de l'élément SE, et/ou du dispositif électronique le comprenant, a eu lieu. Ses informations CR Num et WR Num ont été mises à jour pour correspondre aux informations CR Num VPP et WR Num VPP de la plateforme primaire VPP.

La figure 7 présente un exemple de protocole mis en oeuvre par l'application VPP App. La personne du métier comprend que toutes sortes de protocoles sont envisageables. En particulier, ce protocole est choisi par le concepteur de l'application.

A une étape 501 (Kind of Reset ?), l'application VPP App traite les informations qu'elle a reçues de la part de la plateforme primaire VPP. En particulier, l'application VPP App détermine si l'opération de redémarrage qui a eu lieu est une opération de redémarrage à froid ou une opération de redémarrage à chaud. Si l'opération de redémarrage est une opération de redémarrage à froid (sortie COLD RESET en figure 7) alors l'étape suivante est une étape 502 (VPP App RESET). Si l'opération de redémarrage est une opération de redémarrage à chaud (sortie WARM RESET en figure 7) alors l'étape suivante est une étape 503 (VPP App State ?).

A l'étape 502, l'application VPP App a conscience qu'une opération de redémarrage à froid a eu lieu. Comme dit précédemment, lors d'une opération de redémarrage à froid, la mémoire volatile de l'élément sécurisé SE est effacée. De plus, lorsque l'application VPP App est active, une partie de ces données d'exécution peut être stockée dans une mémoire non volatile.

Selon un exemple, après avoir pris conscience qu'une opération de redémarrage à froid a eu lieu, l'application VPP App vérifie que toutes ses données d'exécutions temporaires ont bien été effacées des différentes mémoires de l'élément sécurisé SE. Selon une variante, l'application VPP App récupère les données qui n'ont pas été effacées.

A l'étape 503, l'application VPP App a conscience qu'une opération de redémarrage à chaud a eu lieu. Comme dit précédemment, lors d'une opération de redémarrage à chaud, l'information qu'un redémarrage logiciel est demandé a circulé. Cependant, si l'application VPP App était en pause, elle a pu manquer cette information. Ainsi, quand l'application est en cours d'exécution au moment où l'opération de redémarrage à chaud a lieu (sortie RUNNING en figure 7), l'étape suivante est une étape 504 (PARTIAL OR TOTAL RESET). Si l'application est en pause au moment où une opération de redémarrage à chaud a lieu, alors l'étape suivante est une étape 505 (IGNORE (OR NOT) RESET). Il est à noté que si l'application VPP App est inactive au moment d'une opération de redémarrage à chaud, ou à froid, l'opération peut n'avoir aucune incidence sur son fonctionnement puisque ni son code d'exécution, ni ses données d'exécution ne sont chargées dans une mémoire volatile de l'élément sécurisé SE.

A l'étape 504, l'application VPP App était en cours d'exécution pendant l'opération de redémarrage à chaud. L'application VPP App peut procéder à un redémarrage total ou partiel. Selon un exemple, l'application peut effacer toutes ses données d'exécution temporaires. Selon un autre exemple, l'application peut conserver des données d'exécution temporaires générales, et n'effacer que des données d'exécution temporaires liées à une ou plusieurs de ses fonctions.

A l'étape 505, l'application VPP App était en pause pendant l'opération de redémarrage à chaud. Selon un exemple, l'opération peut, comme si elle avait été en cours d'exécution, effectuer un redémarrage total ou partiel. Selon un autre exemple, l'application VPP App peut décider d'ignorer l'opération de redémarrage à chaud.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus.

## Revendications

1. Procédé de démarrage d'une première application (VPP App) adaptée à être mise en oeuvre par au moins un système d'exploitation de bas niveau (VPP) d'un élément sécurisé (SE), comprenant la vérification d'au moins une première information (CR Num VPP, WR Num VPP) mise à jour après chaque opération de redémarrage de l'élément sécurisé (SE), ladite première information (CR Num VPP, WR Num VPP) étant associée audit au moins un système d'exploitation de bas niveau (VPP).

2. Elément sécurisé (SE) configuré pour mettre en oeuvre au moins un système d'exploitation de bas niveau (VPP) mettant en oeuvre au moins une première application (VPP App), dans lequel, à chaque démarrage de la première application (VPP App), une première information (CR Num VPP, WR Num VPP) mise à jour après chaque opération de redémarrage de l'élément sécurisé (SE), est vérifiée, ladite première information (CR Num VPP, WR Num VPP) étant associée audit au moins un système d'exploitation de bas niveau (VPP).

3. Procédé selon la revendication 1, ou élément selon la revendication 2, dans lequel la vérification de la première information (CR Num VPP, WR Num VPP) est effectuée par comparaison de la première information (CR Num VPP, WR num VPP) à une deuxième information (CR Num, WR Num) associée à ladite première application.

4. Procédé ou élément selon la revendication 3, dans lequel la comparaison entre la première information (CR Num VPP, WR num VPP) et la deuxième information (CR Num, WR num) est effectuée par ledit au moins un système d'exploitation de bas niveau (VPP).

5. Procédé ou élément selon la revendication 3, dans lequel la comparaison entre la première information (CR Num VPP, WR num VPP) et la deuxième information (CR Num, WR num) est effectuée par ladite première application (VPP App).

6. Procédé ou élément selon l'une quelconque des revendications 3 à 5, dans lequel, si la vérification échoue, ladite au moins une deuxième information (CR Num, WR Num) est mise à jour.

7. Procédé ou élément selon la revendication 6, dans lequel ladite au moins une deuxième information (CR Num, WR Num) est mise à jour en étant rendue égale à la première information (CR Num VPP, WR Num VPP).

8. Procédé ou élément selon la revendication 6 ou 7, dans lequel, après la mise à jour de ladite au moins une deuxième information (CR Num, WR Num), ledit au moins un système d'exploitation de bas niveau (VPP) informe ladite première application (VPP App) qu'une opération de redémarrage a eu lieu.

9. Procédé ou élément selon la revendication 8, dans lequel après avoir été informée, la première application (VPP App) met en oeuvre un protocole prenant en compte qu'une opération de redémarrage a eu lieu.

10. Procédé selon l'une quelconque des revendications 1, 3 à 9, ou élément selon l'une quelconque des revendications 2 à 9, dans lequel au moins une troisième information (WR Num VPP, CR Num VPP), associée audit au moins un système d'exploitation de bas niveau (VPP) et mise à jour après chaque opération de redémarrage de l'élément sécurisé (SE) est vérifiée à chaque démarrage de ladite première application (VPP App).

11. Procédé ou élément selon la revendication 10, dans lequel ladite au moins une première information (CR Num VPP, WR Num VPP) est associée à un premier type d'opération de redémarrage, et la troisième information (WR Num VPP, CR Num VPP) est associée à un deuxième type d'opération de redémarrage.

12. Procédé ou élément selon la revendication 11, dans lequel l'opération de redémarrage d'un premier type est une opération de redémarrage à froid où une alimentation électrique de l'élément sécurisé (SE) est arrêtée.

13. Procédé ou élément selon la revendication 11 ou 12, dans lequel l'opération de redémarrage d'un deuxième type est une opération de redémarrage à chaud où une alimentation électrique de l'élément sécurisé (SE) n'est pas arrêtée.

14. Procédé selon l'une quelconque des revendications 1, 3 à 13, ou élément selon l'une quelconque des revendications 2 à 13, dans lequel l'élément sécurisé (SE) est embarqué dans un dispositif électronique.

15. Procédé selon l'une quelconque des revendications 1, 3 à 13, ou élément selon l'une quelconque des revendications 2 à 13, dans lequel l'élément sécurisé (SE) est intégré dans un dispositif électronique.

16. Procédé selon l'une quelconque des revendications 1, 3 à 15, ou élément selon l'une quelconque des revendications 2 à 15, dans lequel l'élément sécurisé (SE) est adapté à mettre en oeuvre au moins une deuxième application.

17. Application adaptée à être mise en oeuvre par au moins un système d'exploitation de bas niveau (VPP) d'un élément sécurisé (SE) selon l'une quelconque des revendications 2 à 16.
